# EUROPEAN PATENT APPLICATION

(11) **EP 4 618 331 A1**
(43) Date of publication of application: **17.09.2025**
(21) Application number: 24163949.1
(22) Date of filing: 15.03.2024
(51) Int. Cl.: H02B 3/00, H02B 13/045, F16L 55/175

(54) **METHOD TO SEAL A GAS-INSULATED ELECTRICAL APPLICATION, KIT AND GAS-INSULATED ELECTRICAL APPLICATION**

(71) Applicant: Hitachi Energy Ltd, 8050 Zürich (CH)
(72) Inventor: Zweiacker, Kai Walter, 8050 Zürich (CH); Agostini, Francesco Siddharta Luigi, 8049 Zürich (CH); Botor, David, 5312 Döttingen (CH); Schuster, Peter, 8184 Bachenbülach (CH); Rosson, Etienne, 5312 Döttingen (CH); Berger, Reto, 5417 Untersiggenthal (CH); Skea, Adrian, 68100 Mulhouse (FR)
(74) Representative: Michalski Hüttermann & Partner Patentanwälte mbB

(57) **Abstract**

The invention relates to a method to seal a section (110) of a gas-insulated electrical application (100), e.g. the application (100) configured as a gas-insulated switch-gear or a gas-insulated line, particularly in order to enhance the lifetime of the application (100), the method comprising the steps of
surface treatment (30) of at least an outer face (122) of the section (110),
applying (40) an adhesive (2) to the outer face (122),
arranging (50) on the outer face (122) a flexible flat material (4), and
curing (60) the adhesive (2).

The invention furthermore relates to a kit (1) and to a gas-insulated electrical application (100).

## Description

### Technical Field

The disclosure relates to a method to seal a gas-insulated electrical application. The disclosure also relates to a kit configured for conducting the method and to a gas-insulated electrical application.

### Background Art

Gas-insulated electrical applications typically contain insulating gas in the vicinity of parts carrying electricity. Such gas is, for example, kept in a closed volume or circuit inside the application. Over the time, for example due to material ageing and/or corrosion, leaks may occur which cause insulating gas to leave the application. Thus, it is of interest to keep the gas-insulated electrical applications sealed and to repair leaks. It is also of interest to provide an application that is more leak-proof.

### Summary of invention

It is therefore an object to provide solutions with respect to gas-insulated electrical applications in order to enhance lifetime, cost of operation and cost of repair. Particularly it is an object to avoid or reduce disadvantages of known solutions.

The objects are solved by the features of the independent claims. Preferred implementations are detailed in the dependent claims, the description and the figures.

The objects are particularly solved by a method to seal a section of a gas-insulated electrical application, comprising the steps of
surface treatment of at least an outer face of the section, wherein the surface treatment includes cleaning the outer face and/or roughening the outer face, particularly wherein the outer face may be a radial outer face and/or an axial outer face,
applying an adhesive to the outer face,
arranging on the outer face a flexible flat material, wherein the flexible flat material is configured for being bonded, infused and/or permeated by the adhesive in order to form and/or forming a composite material with the adhesive, e.g. wherein the flexible flat material may be arranged on the outer face together with the adhesive, and/or the flexible flat material may be configured for being bonded to the outer face by means of the adhesive, and
curing the adhesive.

In other words, particularly, a repair method is suggested where a leaking area of a gas-insulated electrical application is sealed substantially based on the following steps. First, the leaking area is treated on its surface to remove debris, dirt and corrosion or the like, and particularly to remove coatings and/or paint. Treating of the leaking area may alternatively or additionally serve to increase the surface roughness, e.g. to increase adherence of an adhesive thereto. Later, an adhesive is put on the cleaned/roughened leaking area. The adhesive may be liquid and/or pasty. The adhesive may be applied on its own or in combination with a flexible material like a tape material that is already or is being infused and/or coated with the adhesive. The flexible material may as well be put atop the adhesive. The flexible material may bond with and/or get infused by the adhesive to later form a composite material or the flexible material may already be infused with or attached to the adhesive forming a composite material, especially wherein the adhesive can be hardened after being put on the leaking area and/or after the flexible material is put on the adhesive. The adhesive may be hardened, e.g. by means of time, chemical reaction and/or temperature. Thus, the leaking area may be stopped from leaking.

The invention beneficially provides that gas-insulated electrical applications can be treated when a leakage occurs in order to reduce, stop or remove the leakage. The invention also may be considered as a preventive measure for the section to avoid or reduce the risk of leakage. A sealing composite shell is provided on the section. The invention provides an approach widely and flexibly applicable to gas-insulated electrical applications, whenever a section thereof leaks or could leak. The invention likely avoids a cost-intensive replacement of parts, gaskets or the like. The invention may be applicable all over the world outdoors and/or in different climate areas. Additionally, the invention can be applicable easily in outdoor environment.

It may be possible to remove the sealing that the invention provides without damage to the section. This even provides the option to repeat the method.

The invention likely avoids that the gas-insulated electrical application needs to be disassembled or shut down, since it is particularly only or mostly worked on the application from outside of the application. Thus, no outage may be required upon applying the method of the invention. Insulating gas does not need to be handled.

The invention has found that that a lot of gas-insulated electrical applications or utilities may face problems with gas leakages at some sections, especially at flanges, e.g. those comprised by gas-insulated switchgear (GIS) or gas-insulated lines (GUL) on their installed base. The invention provides flexible and easy approaches to seal those sections or flanges, wherein prior art solutions from third parties are quite expensive and not flexible enough when it comes to sealing different flange sizes. The invention provides a cost-effective outdoor-usable flange sealing solution which should be applicable for GIS/GIL flanges with different diameters, while in operation (without de-gassing and without opening the flange), that stops the gas leak and enables the same gas tightness as for new GIS.

Flanges of gas-insulated electrical applications are typically sealed with a gasket or ring gasket, especially an O-Ring, that may additionally be protected by a groove filled with grease. The groove may be formed at least on part on a flange, e.g. a front end thereof. The groove may have a ring shape corresponding to the gasket. The flange may comprise a hole, e.g. a thread hole, to fill the groove with grease. This grease can separate and therefore protect the O-Ring from environmental impacts. During long operation times, heat, rain, and other influences lead to a washing out of the grease. If the groove is not refilled, corrosive reactions on the surface of the O-Ring groove or/and an embrittlement of the O-Ring itself can occur. This finally leads to a leakage the present invention can stop effectively.

The above details, advantages and effects may be further improved by means of one or more of further preferred features as described herein.

Sealing relates to closing paths or gaps for insulating gas. Sealing is typically conducted using material configured for sealing and/or blocking. Sealing relates to making a component or the section gas-tight or fluid-tight. A leaking path - for example which can eventually come up in the region of a gasket when two rigid bodies like pipes are connected using said gasket - may be sealed by blocking the leaking path. Blocking may be conducted using an adhesive put onto and/or into the leaking path, and curing the adhesive. A problem using this simple approach to seal a leaking path can be that the pressure of the insulating gas may eventually lead to a leak again. Thus, a more sophisticated approach should be adopted for sealing the section, e.g. as proposed herein.

The section of a gas-insulated electrical application typically relates to an area or a region thereof, particularly including a flange and/or flange connection. The section typically includes rigid parts or an assembly, particularly involving a gasket configured for sealing the section. The section has an outer face or surface, particularly a plurality thereof. The outer face may include a radial outer face, alternatively or additionally an axial outer face. The outer face typically faces outwardly and/or is arranged in contact to the environment and/or on an outside of the gas-insulated electrical application. The outer face may be at least sectionally ring-shaped, cylindrical, flat and/or convex. The section is meant to keep or guide on one side insulating gas and on the other side the outer face, rendering possible that the section can leak or can be leaky to be subject to the method of the present invention. Typically, the section includes at least one gap, path, hole, and/or contact face, especially providing a possible path for leakage of insulating gas. The at least one gap, path, hole, and/or contact face may be arranged between two or more outer faces.

The surface treatment preferably includes mechanical and/or chemical processes to be applied on a surface, particularly on the outer face. The surface treatment may substantially include subtractive manufacturing processes. The surface treatment may include heating, machining, grinding, brushing, dry ice blasting, laser cleaning, wiping or the like. Sand blasting and/or aggressive and/or etching chemicals may particularly be not applied, e.g. due to regulations in vicinity of the gas-insulated electrical application. In a simple way, surface treatment may include washing the outer face, e.g. using water, acetone, alcohol or other chemicals and/or cleaning agents, and/or sanding the outer face, e.g. using sandpaper or abrasive paper. The surface treatment may provide at least one or both of: increasing the surface roughness (e.g. roughness value Ra and/or Rz) of the outer face, and removing material from the outer face. The surface treatment may be configured without cutting and/or sandblasting.

The adhesive preferably relates to an at least partially fluid, liquid and/or pasty material. The adhesive preferably relates to an at least temporally viscous material, such as a resin or epoxy resin. The adhesive may be configured for mold casting and/or the production of composite material. The adhesive is typically configured as a non-reactive or reactive adhesive. The adhesive may comprise or consist of a polymer compound particularly configured for providing adhesion. The adhesive particularly comprises at least one organic compound. The adhesive may comprise or consist of an elastomer, thermoplastic, emulsion, and/or thermoset. Examples of adhesives are: epoxy, polyurethane, PMMA, cyanoacrylate and acrylic polymers. Particularly, the adhesive may be a two-component (2K) or multi-component adhesive, e.g. including one or more polymer compounds and/or with an epoxy resin base. Particularly, the adhesive may be a hardener mixed or configured to be mixed with the one or more polymer compound. Mixing may be conducted during handling the adhesive, e.g. applying and/or injecting. The adhesive may be considered a molding material. The adhesive may be configured non-toxic under health, safety and environment (HSE) considerations.

Applying the adhesive to the outer face may include the application of the adhesive substantially across the outer face. The adhesive may be in direct contact to and/or may be directly connected to the outer face. The adhesive may be applied by means of an application tool, such as a roll, a brush, an applicator, a spraying device, or the like. The adhesive may be spread or distributed after application to achieve a substantially homogeneous thickness across the outer face. Applying may include that substantially only the adhesive is being applied to the outer face or may include that the adhesive is being applied together with flexible flat material being arranged on the outer face. Applying is typically conducted after surface treatment is done.

Arranging may relate to placing, wrapping and/or winding the flexible flat material on and/or around the outer face, particularly atop the adhesive. The flexible flat material may be arranged to be in contact and/or be connected to particularly at least indirectly to the outer face. The flexible flat material may be arranged to be in contact and/or connected particularly directly to the adhesive. Arranging the flexible flat material may overlap in time with applying or may be conducted after applying is done.

The flexible flat material typically relates to a sheet material, band material, tape material and/or mat material. The flexible flat material typically is or can be infused, covered, permeated, bonded and/or coated with the adhesive. In one embodiment, the flexible flat material is covered and/or permeated by the adhesive, especially already before the step of arranging. The flexible flat material may comprise or consist of pre-impregnated fibers, i.e. a prepreg, to be bonded and/or permeated by the adhesive. The prepreg may comprise fibers in a polymer matrix. The prepreg may be a polyester epoxy prepreg. The flexible flat material or any other material named herein may comprise or consist of a fiber and/or fabric material, e.g. glass, carbon, aramid, silicone, polymer, e.g. polyester, or basalt fibers, particularly to be bonded and/or permeated by the adhesive.

Particularly, the flexible flat material may be provided as a (stock) material that is already covered, coated, permeated and/or infused by the adhesive or by a further adhesive, especially so that applying and attaching substantially can be conducted as one step. The further adhesive may correspond to the adhesive or may be a different adhesive.

The composite material, also known as composition material or composite, is typically understood as a material which comprises two or more constituent materials. These constituent materials have notably dissimilar chemical and/or physical properties, wherein the constituent materials together may create a material with properties unlike these of the bare constituent materials. In the composite material, the individual constituent materials may substantially remain separate and distinct, distinguishing composite materials from mixtures and solid solutions.

Curing the adhesive may relate to the initiation of chemical reactions and/or to waiting for the adhesive to harden and/or to become solid. Curing may be conducted by actively working on the adhesive and/or by letting time pass.

The gas-insulated electrical application may comprise at least one bolt connection, particularly bolt connections. The bolt connection(s) may connect two parts of the gas-insulated electrical application each of which form a part of the section. The method may comprise the steps of, before or after applying and/or arranging, particularly before or after the surface treatment, removing the bolt connection(s) at least in part, and installing replacement nuts to the bolt connection(s). Removing a part of the bolt connection may relate to removing and/or unscrewing a nut of the bolt connection. A bolt of the bolt connection may alternatively or additionally be removed in order to remove the bolt connection. The bolt may be pushed out of the section(s). When the bolt connection is removed at least in part, accessibility of faces of the section may be enhanced, e.g. an axial face and/or the outer face of the section may be accessible better.

Removing may include unscrewing a nut or nuts of the bolt connection(s). Installing may include screwing on the replacement nut(s). The replacement nut(s) may include a sealing ring, especially each replacement nut including one sealing ring, particularly located in a groove of the replacement nut. The replacement nut may be in the form of a cap nut especially including the sealing ring, e.g. opposite the cap. The sealing ring may be configured for sealing the section, particularly sealing the bolt connection. Installing may include an application of a torque to the bolt connection(s) of at least 50 Nm, particularly of 100 Nm ± 40 Nm. Before the step of installing grease, adhesive or the like may be applied to a/the sealing ring of the replacement nut(s), e.g. to increase the surface contact and thereby the sealing function. Such a solution provides that sealing is enhanced due to focussing further possible leaks of the section.

The section may be a flange connection of the gas-insulated electrical application. The flange connection may comprise at least one flange, particularly two mating flanges. The flange connection, particularly its at least one flange or its mating flanges and/or other components thereof like a cover, typically comprises or consists of an aluminum alloy, e.g. which is coated and/or painted. The flange connection may comprise a flange closed with and/or coupled to a lid, a cover, a plate, an adapter, or the like. The flange connection may comprise two, three or more of the outer face. The flange connection may comprise at least one axial face, e.g. which is arranged substantially oblique or perpendicular to the outer face and/or facing along an axial direction. The flange connection may comprise two axial outer faces facing away from one another. The bolt connections may extend through at least one of the flange, particularly through the mating flanges and/or through the flange and the lid/cover/etc. Particularly, a gasket, ring gasket and/or O-ring may be arranged between the mating flanges or between the flange and the lid/cover/etc. Particularly, a spacer, e.g. in the form of a ring spacer and/or made of metal, may be arranged between the mating flanges or between the flange and the lid/cover/etc. The spacer may provide one or more of the outer face. Particularly, the outer faces are arranged axially adjacent and/or are arranged substantially in parallel to one another. The flange connection may have contact face(s), e.g. where the mating flanges and/or the spacer and/or the lid/cover/etc. are in contact with each other. The contact face(s) may run towards an outside of the flange connection especially to be sealed by means of the method. The outer face(s) and/or the axial face(s) may substantially comprise a ring shape.

Applying may be conducted using a tool configured for substantially uniform distribution of the adhesive across a surface, particularly on the section and/or across the outer face(s). The tool may be a spatula, particularly a grooved spatula. Applying may be conducted using the grooved spatula for uniform distribution of the adhesive across the outer face(s). For example, in a first step the adhesive may be placed on the section and in a further step, after or simultaneously to the first step, the adhesive may be distributed using the tool or the spatula. A uniform distribution of the adhesive results in enhancement of the sealing by means of providing a better adherence of the flexible flat material to the section.

The surface treatment may include removing a surface layer of the outer face, the surface layer including at least one of a coating, dirt, paint and corroded material especially to reveal the base material of the section, which may be metal, especially an aluminum alloy. The surface layer may be understood as an outermost material layer of the section, particularly the outer face. The surface layer may comprise a thickness, particularly on average, of at least 0.01 mm and/or up to 2 mm, particularly up to 1 mm or up to 0.5 mm. Removing may be conducted by means of mechanical and/or chemical processes. Removing may inherently result in roughening of the surface, depending on the process conducted. Removing enhances the effectivity of the sealing.

The surface treatment may include machining of the outer face by means of a rotating wire brush. The rotating wire brush may comprise steel wires extending radially outwards configured as a tool to be rotated. The steel wires may be cranked or straight. The rotating wire brush may be used with a drill machine or an angle grinder or other rotary tools. The rotating wire brush may result in a cleaning and/or removing process on the surface. Due to high abrasion effect, the rotating wire brush may result in a roughening of the surface and thereby an enhancement in adherence of the adhesive.

The steps of applying and arranging may be conducted such that alternating and/or stacked layers of adhesive and flexible flat material are provided at least in sections of the outer face. For example, flexible flat material may be stacked in some areas of the outer face or may be stacked substantially along or around the entire outer face. A repetition of applying and arranging may be conducted for at least two times, preferably at least four times, particularly at least five times. Alternating and/or stacked layers enhance mechanical stability and lifetime. The step of arranging may include that the flexible flat material is pressed against the adhesive and/or the outer face to enhance that the adhesive bonds with the flexible flat material and/or the outer face. For pressing, a rotary tool or roller may be used.

It may be provided that the step of curing is conducted for at least a certain amount of time, e.g. for one hour. Curing is particularly conducted after the steps of applying and/or arranging. Curing is particularly conducted substantially at room temperature, e.g. at 25 °C ± 5 °C and/or between 50 °C and 0°C. Particularly curing is conducted for at least two hours or at least three hours. Such a time and temperature of curing, particularly in combination with a two-component and/or reactive adhesive, has been proven to result good sealing results.

In a preferred embodiment the flexible flat material has or is a molding prepreg, for example a precured polyester epoxy prepreg. The flexible flat material may be provided as a strip with a length of at least 1 m or at least 2 m and/or long enough to surround the section at least one or two times. Here, especially throughout the steps of applying and arranging, the flexible flat material may be stacked in a plurality of layers, for example at least two, three, four, five, six, seven or more layers. Arranging may be conducted to provide a first layer of flexible flat material, wherein applying may be repeated before arranging is continued to provide a second layer of flexible flat material; this may be repeated further. This enhances the bonding and sealing. Optionally, especially throughout applying and arranging, the flexible flat material may be wound/wrapped under tension for a tight fit.

Particularly after applying and/or arranging, particularly before curing, the following steps may be provided: winding on the outer faces a foil, the foil being a shrink foil; and heating the foil, particularly with an external heater. The shrink foil may be configured for shrinking when being heated. The shrinking supports the consolidation of adhesive and flexible flat material. Shrinking may be permanent, especially even after cooling down. The foil may as well be understood as a wrap, film or thin sheet, e.g. comprising or consisting of a polymer compound. The external heater may be an electrical heater, a heating mat, a blow heater, blow dryer, or the like. Particularly with the flexible flat material being a molding prepreg and in combination with a shrink foil, an excellent sealing can be provided with a long lifetime. Here, the step of curing may be conducted for at least ten or twenty hours, particularly at room temperature. The shrink foil may be removed after curing.

In a preferred embodiment the flexible flat material has or is a fiber material, for example a dry glass fiber, especially in the form of a tape. The dry glass fiber may be provided without a matrix and/or not infused with a matrix. Here, especially throughout the steps of applying and arranging, the flexible flat material may be stacked in a plurality of layers, for example two, three, four, five, six, seven or more layers. Arranging may be conducted to provide a first layer of flexible flat material, wherein applying may be repeated before arranging is continued to provide a second layer of flexible flat material; this may be repeated further. Here, especially throughout applying and arranging, the flexible flat material may be wound/wrapped under tension for a tight fit. Optionally, the layup of adhesive and flexible flat material may be wrapped with a shrink foil especially for a part of the curing step.

Particularly after curing (e.g. so that adhesive and flexible flat material, e.g. dry glass fiber tape, are bonded at least in part and/or form a composite material or the like; it is preferred that the adhesive is at least substantially hardened and/or cured; curing may need to be conducted for one, two, three or more hours in this case; it may be beneficially provided that the adhesive is not fully cured), the following steps may be provided: winding on the outer faces an infusion mesh, particularly net-bleeder, particularly wherein winding is conducted for at least two times to provide stacked layers of the infusion mesh; attaching a vacuum foil with at least one port onto the outer faces; creating a vacuum inside the vacuum foil acting on the outer faces by application of a suction to the at least one port; injecting a molding material and/or further adhesive into the at least one port for forming a further composite material with the infusion mesh. It is noted that curing before the above steps may be conducted such that the adhesive has not entirely been hardened/cured; this causes that the injected molding material is able to connect to the partially uncured adhesive, especially reactive molecules thereof, and forms a stronger bond. The flexible flat material, especially as a dry glass fiber tape, may get at least partially infused and/or impregnated by the molding material enhancing mechanical stability and sealing effectivity. For example, between two and four hours of curing can be considered.

Especially in combination with the above steps, the molding material may comprise a polymer compound, for example an epoxy resin, and optionally a hardener mixed with the polymer compound. Alternatively or additionally, the molding material may correspond to the adhesive i.e. comprise at least one similar or equal component or may be the same. The molding material and/or the adhesive may comprise or be a vulcanizing rubber. The vacuum foil may have as the at least one port a vacuum port and a molding material inlet port, preferably offset by 180°±90° around the section. The vacuum foil may be sealed by means of a tape, e.g. a tacky tape. The molding material may be cured after injecting for at least ten or twenty hours, particularly at room temperature. The vacuum foil may be removed after curing. Vacuum may be created using a vacuum or suction pump attached to the at least one port. Molding material may be injected by attaching a container with the molding material to the at least one port and opening the at least one port especially after vacuum has been created; thereby, molding material is sucked into the at least one port to distribute across outer face. The infusion mesh improves flow of the molding material under vacuum to distribute substantially evenly across the outer face.

The method may include, particularly after the step of surface treatment and particularly before the step of applying, the step of covering an area adjacent to the outer face with a covering means, e.g. a tape, to prevent contamination of these areas, especially an application of the adhesive thereto. The covering means may be removed later, e.g. after the steps of applying, arranging and/or curing.

The objects are furthermore particularly solved by a kit particularly configured for conducting a/the method, the kit comprising an adhesive, a flexible flat material and a plurality of replacement nuts. The kit may further comprise a foil that is a shrink foil. Alternatively or additionally the kit may further comprise an infusion mesh, molding material, and a vacuum foil with at least one port. The features of the kit may be further defined by features as mentioned throughout the present disclosure. The invention may also relate to a use of the kit, e.g. for sealing a section of a gas-insulated electrical application.

The objects are furthermore particularly solved by a gas-insulated electrical application with a section, the gas-insulated electrical application comprising
an adhesive applied to a outer face of the section, and
a flexible flat material arranged on the outer face which forms a composite material with the adhesive,
optionally wherein the section has or is a flange connection particularly comprising two mating flanges or a flange closed with a lid, particularly the flange connection comprising two of the outer face and two axial outer faces facing away from one another, bolt connections extending through the mating flanges or the flange and the lid, and/or a ring gasket between the mating flanges or between the flange and the lid, particularly wherein the outer faces are arranged axially adjacent,
optionally the bolt connections comprising replacement nuts with sealing rings.

The gas-insulated electrical application is improved in that a leakage of insulating gas is less likely to occur relative to known solutions.

The gas-insulated electrical application may be the result of and/or may correspond to the method and its preferred embodiments described herein; thus, corresponding features and/or the description may be adopted for the gas-insulated electrical application. Preferred embodiments of the gas-insulated electrical application may be as follows.

The gas-insulated electrical application may comprise alternating and/or stacked layers of adhesive and flexible flat material and a foil arranged on the outer faces. The flexible flat material may have or may be a molding prepreg. The foil may be arranged atop the flexible flat material.

The gas-insulated electrical application may comprise an infusion mesh and particularly molding material forming a further composite material with the infusion mesh. The gas-insulated electrical application may comprise a vacuum foil arranged on the outer faces. The flexible flat material may have or may be a fiber material, for example a dry glass fiber tape. The vacuum foil may be arranged atop infusion mesh. The infusion mesh may be arranged atop the flexible flat material and/or the molding material.

The gas-insulated electrical application may be configured as a gas-insulated switchgear or a gas-insulated line with the section. The gas-insulated electrical application may be configured as a medium voltage or high voltage application. The gas-insulated electrical application may comprise and/or may be filled with insulating gas, particularly under pressure. The section may be in contact to the insulating gas, e.g. on a side opposite the outside face and/or on an inner face.

The term high voltage means preferably a voltage above 12 kV or 36 kV or 72 kV or 1100 kV. A high voltage preferably relates to nominal voltages in the range from above 12 kV, 36 kV or 72 kV to 550 kV or 1100 kV, like 145 kV, 245 kV or 420 kV, or even more. The term medium voltage means preferably a voltage above 1 kV or 12 kV or 36 kV. A medium voltage preferably relates to nominal voltages in the range from above 1 kV, 12 kV or 36 kV to 72 kV, like 5 kV, 10 kV, 25 kV or 70 kV.

The gas-insulated switchgear may include an earthing switch, circuit-breaker, voltage converter and/or fast-action grounding device, e.g. including the section and/or mounted by means of the section, particularly the flange connection.

The gas-insulated line may include a nominal conductor that is supported in an enclosure of the gas-insulated line. The enclosure may be substantially elongated e.g. along the axial direction, particularly sectionally pipe-shaped. The enclosure may include the section, particularly in the form of the flange connection. The enclosure is filled or at least configured to be filled with insulating gas under pressure. The pressurized insulating gas creates a force that may act on the enclosure and thus on the section, particularly flange connection.

The insulating gas and/or a dielectric insulation medium can be any suitable gas that enables to adequately extinguish the electric arc formed between contact elements during a current interruption operation, such as, but not limited, to an inert gas as, for example, sulphur hexafluoride SF6. Specifically, the insulating gas used can be SF6 gas or any other dielectric insulation medium and/or insulating gas, may it be gaseous and/or liquid, and in particular can be a dielectric insulation gas or arc quenching gas. Such dielectric insulation medium and/or insulating gas can for example encompass media comprising an organofluorine compound, such organofluorine compound being selected from the group consisting of: a fluoroether, an oxirane, a fluoroamine, a fluoroketone, a fluoroolefin, a fluoronitrile, and mixtures and/or decomposition products thereof. The insulating gas and/or dielectric insulation medium can be selected from the group consisting of: a hydrofluoroether, a perfluoroketone, a hydrofluoroolefin, a perfluoronitrile, and mixtures thereof.

The term 'or' may be replaced by 'and/or' throughout the present disclosure. As such, where 'or' is used, it is not necessarily meant that merely alternatives are named.

### Brief description of drawings

These and other aspects of the invention will be apparent from and elucidated with reference to the implementations described hereinafter.

In the drawings:
Fig. 1A-B shows as prior art a flange connection in a schematic view (A) and in a cross-section (B);
Fig. 2 shows a method in a schematic view;
Fig. 3 shows a further method in a schematic view;
Fig. 4 shows a kit e.g. for conducting the method of Fig. 2 in a schematic view;
Fig. 5 shows a further kit e.g. for conducting the method of Fig. 3 in a schematic view;
Fig. 6 shows a gas-insulated application in a sectional view which may be the result of the method of Fig. 2 using the kit of Fig. 4; and
Fig. 7 shows a further gas-insulated application in a sectional view which may be the result of the method of Fig. 3 using the kit of Fig. 5.

### Description of implementations

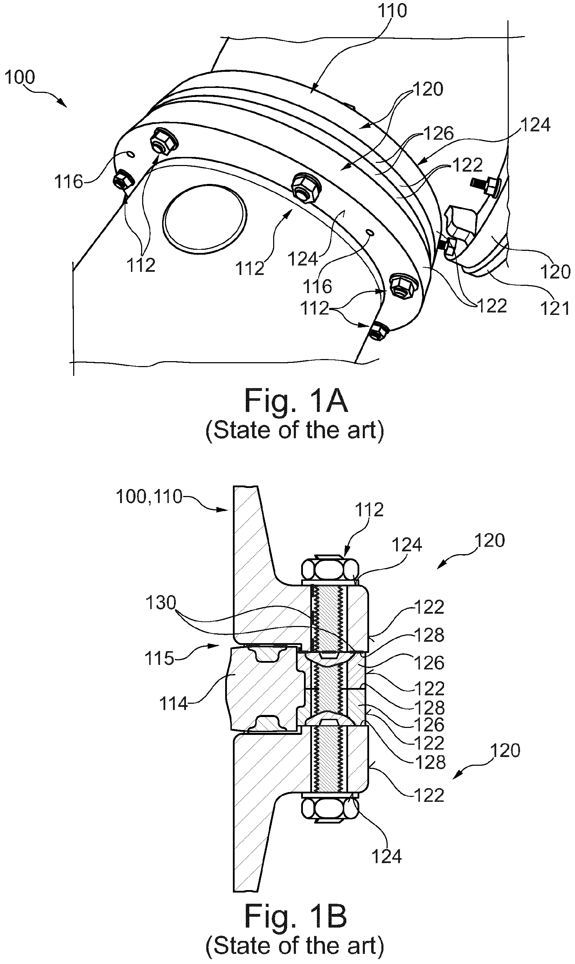

Fig. 1A and Fig. 1B show a section 110 of a gas-insulated electrical application 100 that is a gas-insulated line (GIL) with an enclosure, a conductor supported in the enclosure and insulating gas in the enclosure. The section 110 is a flange connection comprising two mating flanges 120. The application 100 furthermore has a flange 120 closed with a cover or a lid 121 as shown on the right side in Fig. 1A. Fig. 1B shows a cross-section of the section 110 of Fig. 1A.

The flange connection comprises four outer faces 122 and axial outer faces 124 facing away from one another along an axial direction, bolt connections 112 extending through the mating flanges 120, and a ring gasket 114 in a groove 115 between the mating flanges 120. Two ring-shaped spacers 126 are arranged between the mating flanges 120 and radially outside the ring gasket 114. Each of the spacers 126 have one of the outer faces 122. The bolt connections 112 extend through the spacers 126. The four outer faces 122 are arranged axially adjacent. The four outer faces 122 are ring-shaped and/or shaped cylindrically. It is understood that the two outer faces 122 of the mating flanges 120 are arranged at least indirectly axially adjacent. Between each flange 120 and the axially directly adjacent spacer 126, and between the two spacers 126, respectively, contact faces 128 are located, where the corresponding components are in contact to each other in terms of area. The contact faces 128 typically originate from the outer face 122, particularly perpendicularly.

Typically, the flanges 120 and the spacers 126 are made of metal, particularly an aluminum alloy. Typically, the flange connection is coated or painted on the outside. Although the ring gasket 114 seals the flange connection against leaks to the outside, especially when surrounded by grease, the invention has found that it may occur over time that the ring gasket 114 may become leaky for insulating gas to pass gaps towards the outside. This may be due to grease washing out. Gaps are present at the bolt connections 112 and/or at the contact faces 128 between the mating flange(s) 120 and/or the spacer(s) 126. Substantially, a creep path 130 may form for insulating gas to leave the gas-insulated electrical application 100. Additionally, gas may leak through thread holes 116 which are used for filling the groove with grease. The creep path 130 and/or the thread holes 116 may be sealed based on the present invention as described herein, particularly in the following paragraph.

For example, it is suggested to conduct a method to seal a section 110 of a gas-insulated electrical application 100, e.g. the gas-insulated electrical application 100 configured as a gas-insulated switchgear or a gas-insulated line. The method may comprise surface treatment of at least an outer face of the section 110, e.g. of outer face(s) 122 and/or of axial outer face(s) 124, applying an adhesive 2 to the outer face 122, arranging on the outer face 122 a flexible flat material 4, and curing the adhesive 2. Such a method, may beneficially be applied to seal the section 110 as shown in Fig. 1A-B.

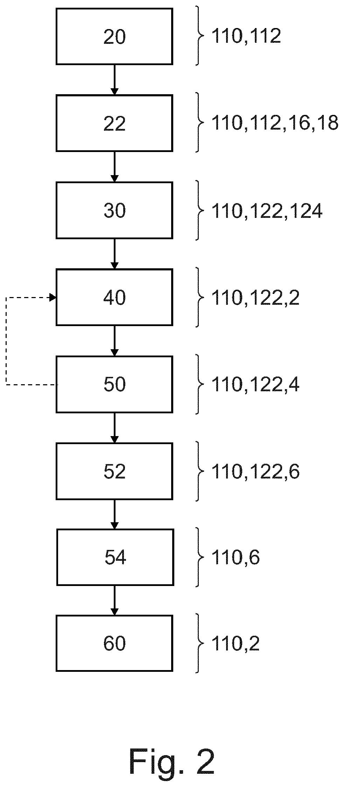

Fig. 2 schematically shows a method to seal a section 110 of a gas-insulated electrical application 100. The section 110 is a part of a flange connection, similar to that of Fig. 1, which flange connection comprises bolt connections 112. This method may be referred to a prepreg solution involving a polyester epoxy prepreg.

The method of Fig. 2 comprises the steps of, especially in the given order or optionally in a different order, wherein steps may optionally be added, rearranged, changed and/or left out:
removing 20 the bolt connections 112 in part and including unscrewing nuts;
installing 22 replacement nuts 16 with greased sealing rings 18 to the bolt connections 112 applying a torque of 100 Nm ± 10 Nm;
surface treatment 30 of at least an outer face 122 of the section 110 and/or surface treating the outer face 122 including cleaning the outer face 122 and roughening the outer face 122 and including removing a surface layer of the outer face 122 and machining of the outer face 122 by means of a rotating wire brush, wherein removing and/or installing 22 may as well be conducted after surface treatment 30;
applying 40 an adhesive 2 to the outer face 122 using a grooved spatula;
arranging 50 on the outer face 122 a flexible flat material 4 in the form of a molding prepreg that is configured for being bonded and/or permeated by the adhesive 2 in order to form a composite material with the adhesive 2, wherein applying 40 and arranging 50 is repeated and conducted such that alternating and/or stacked layers of adhesive 2 and flexible flat material 4 are provided at least in sections of the outer face 122, which is indicated by the dotted arrow;
winding 52 on the outer faces 122 a foil 6 that is a shrink foil;
heating 54 the foil 6 with an external heater; and
curing 60 the adhesive 2 for at least 24 hours at room temperature.

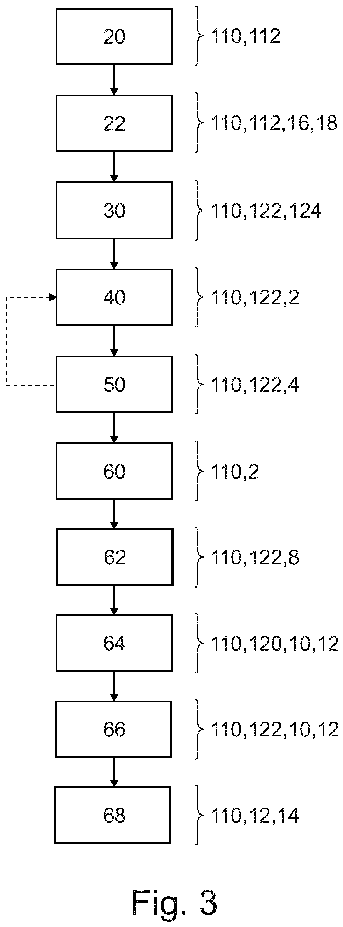

Fig. 3 schematically shows a method to seal a section 110 of a gas-insulated electrical application 100. The section 110 is a part of a flange connection, similar to that of Fig. 1, which flange connection comprises bolt connections 112. This method may be referred to a involving vacuum infusion process.

The method of Fig. 3 comprises the steps of, especially in the given order or optionally in a different order, wherein steps may optionally be added, rearranged, changed and/or left out:
removing 20 the bolt connections 112 in part and including unscrewing nuts;
installing 22 replacement nuts 16 with greased sealing rings 18 to the bolt connections 112 applying a torque of 100 Nm ± 10 Nm;
surface treatment 30 of at least an outer face 122 of the section 110 and/or surface treating the outer face 122 including cleaning the outer face 122 and roughening the outer face 122 and including removing a surface layer of the outer face 122 and machining of the outer face 122 by means of a rotating wire brush, wherein removing and/or installing 22 may as well be conducted after surface treatment 30;
applying 40 an adhesive 2 to the outer face 122 using a grooved spatula;
arranging 50 on the outer face 122 a flexible flat material 4 in the form of a fiber material that is configured for being bonded and/or permeated by the adhesive 2 in order to form a composite material with the adhesive 2, wherein applying 40 and arranging 50 is repeated and conducted such that alternating and/or stacked layers of adhesive 2 and flexible flat material 4 are provided at least in sections of the outer face 122, which is indicated by the dotted arrow;
curing 60 the adhesive 2 for at least three hours at room temperature;
winding 62 on the outer faces 122 an infusion mesh 8, wherein winding 62 may be conducted for two or more times to provide stacked layers of the infusion mesh 8;
attaching 64 a vacuum foil 10 with two ports 12 onto the outer faces 122;
creating 66 a vacuum inside the vacuum foil 10 acting on the outer faces 122 by application of a suction or vacuum to the at least one port 12; and
injecting 68 a molding material 14 into the at least one port 12 for forming a further composite material with the infusion mesh 8, wherein the molding material 14 corresponds to the adhesive, e.g. comprises a polymer compound, for example an epoxy resin, and a hardener mixed with the polymer compound.

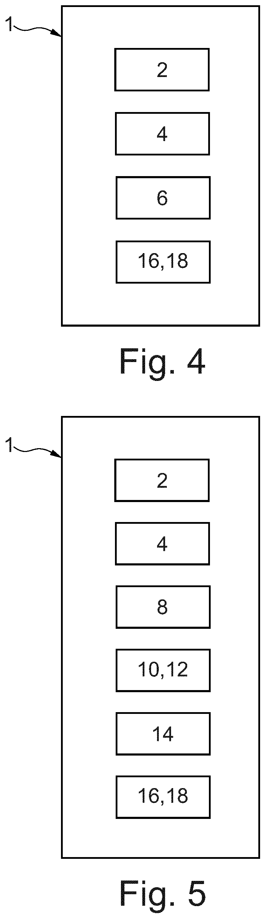

Fig. 4 shows a kit 1 configured for conducting the method of Fig. 2, comprising the adhesive 2, the flexible flat material 4 and a plurality of replacement nuts 16 with sealing rings 18, further comprising a foil 6 that is a shrink foil. The kit may provide substantially all products necessary to conduct the method, wherein some tools may additionally be necessary or added to the kit, e.g. a wire brush, a spatula, a heater, a compaction roller, mechanical tools (wrench etc.), chemicals, cleaning agents, acetone and/or the like.

Fig. 5 shows a kit 1 configured for conducting the method of Fig. 3, comprising the adhesive 2, the flexible flat material 4 and a plurality of replacement nuts 16 with sealing rings 18, further comprising the infusion mesh 8, molding material 14, and a vacuum foil 10 with at least one port 12. The molding material 14 may be the same as the adhesive 2, thereby may also be understood as further adhesive. The kit may provide substantially all products necessary to conduct the method, wherein some tools may additionally be necessary or added to the kit, e.g. a wire brush, a grooved spatula, a vacuum pump, a compaction roller, mechanical tools (wrench etc.), chemicals, cleaning agents, acetone and/or the like.

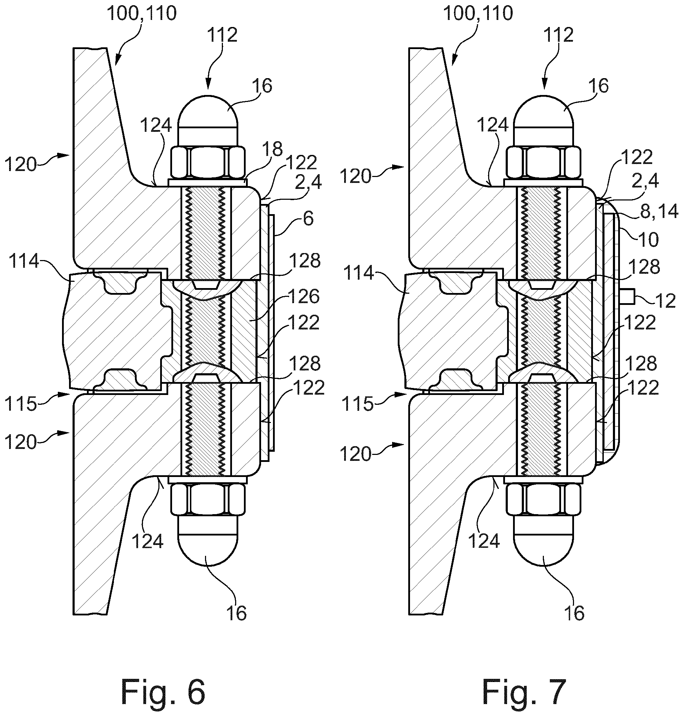

Fig. 6 and Fig. 7 each show a gas-insulated electrical application 100 with a section 110 that has been sealed using a method according to the invention. The section 110 is a flange connection comprising two mating flanges 120 each with one of the outer face 122 and and one axial outer face 124. The axial outer faces 124 face away from one another in an axial direction. Bolt connections 112 extend through the mating flanges 120 and a ring gasket 114 is arranged between the mating flanges 120. Further, a spacer 126 is arranged between the mating flanges 120 providing one of the outer face 122. Contact faces 128 are located between the flanges 120 and the spacer 126. The gas-insulated electrical applications 100 may be configured as a gas-insulated switchgear or line with the section 110.

The gas-insulated electrical application 100 of Fig. 6 comprises an adhesive 2 applied to an outer face 122 of the section 110, and a flexible flat material 4 in the form of a molding prepreg arranged on the outer faces 122 which forms a composite material with the adhesive 2. Substantially, the molding prepreg is bonded to the outer faces 122 by means of the adhesive 2. Optionally, the molding prepreg is permeated and/or infused by the adhesive 2. Atop the adhesive 2 and the flexible flat material 4, a foil 6, especially a shrink foil, is arranged. The gas-insulated electrical application 100 may be the result of the application of the method of Fig. 2 to a flange connection. The outer faces 122 are arranged axially adjacent. The bolt connections 112 comprise nuts or replacement nuts 16 with sealing rings 18 which seal a possible leakage. The gas-insulated electrical application 100 comprises alternating and stacked layers of the adhesive 2 and the flexible flat material 4.

The gas-insulated electrical application 100 of Fig. 7 comprises an adhesive 2 applied to an outer face 122 of the section 110, and a flexible flat material 4 in the form of a fiber material arranged on the outer face 122 which forms a composite material with the adhesive 2. Substantially, the fiber material is bonded to the outer faces 122 by means of the adhesive 2. Typically, the fiber material is permeated and/or infused by the adhesive 2. The gas-insulated electrical application 100 also comprises an infusion mesh 8, molding material 14 forming a further composite material with the infusion mesh 8 and a foil 10 arranged on the outer faces 122. The foil 10 is particularly arranged atop the adhesive 2 and the flexible flat material 4 and particularly atop the infusion mesh 8 and the molding material 14. The foil 10 has at least one port 12 that has been used for the suction of vacuum and/or the injection of molding material 14. The gas-insulated electrical application 100 may be the result of the application of the method of Fig. 3 to a flange connection.

### Reference signs list

- 2: adhesive
- 4: flexible flat material
- 6: foil
- 8: infusion mesh
- 10: vacuum foil
- 12: port
- 14: molding material
- 16: replacement nut
- 18: sealing ring
- 20: removing
- 22: installing
- 30: surface treatment
- 40: applying
- 50: arranging
- 52: winding
- 54: heating
- 60: curing
- 62: winding
- 64: attaching
- 66: creating
- 68: injecting
- 100: gas-insulated electrical application
- 110: section
- 112: bolt connection
- 114: ring gasket
- 115: groove
- 120: flange
- 121: lid
- 122: outer face
- 124: outer face
- 126: spacer
- 128: contact face
- 130: path

## Claims

1. Method to seal a section (110) of a gas-insulated electrical application (100), comprising the steps of
surface treatment (30) of at least an outer face (122) of the section (110), wherein the surface treatment (30) includes cleaning the outer face (122) and/or roughening the outer face (122),
applying (40) an adhesive (2) to the outer face (122),
arranging (50) on the outer face (122) a flexible flat material (4) that is configured for being bonded and/or permeated by the adhesive (2) in order to form a composite material with the adhesive (2), and
curing (60) the adhesive (2).

2. Method according to the preceding claim, wherein
the section (110) comprises bolt connections (112), the method comprising the steps of, before or after applying (40) and/or arranging (50), particularly before or after the surface treatment (30),
removing (20) the bolt connections (112) at least in part, and
installing (22) replacement nuts (16) to the bolt connections (112).

3. Method according to the preceding claim, wherein
removing (20) includes unscrewing nuts of the bolt connections (112) and installing (22) includes screwing on the replacement nuts (16) that include a sealing ring (18), and
particularly installing (22) includes an application of a torque to the bolt connections (112) of at least 50 Nm, particularly of 100 Nm ± 40 Nm, and
particularly wherein before installing (22) grease is applied to a/the sealing ring (18) of the replacement nuts (16).

4. Method according to any one of the preceding two claims, wherein
the section (110) is a flange connection comprising two mating flanges (120) or a flange (120) closed with a lid, the flange connection comprising
two of the outer face (122) and two axial outer faces (124) facing away from one another, the bolt connections (112) extending through the mating flanges (120) or the flange (120) and the lid, and a ring gasket (114) between the mating flanges (120) or between the flange (120) and the lid, wherein the outer faces (122) are arranged axially adjacent.

5. Method according to any one of the preceding claims, wherein
applying (40) is conducted with a grooved spatula for uniform distribution of the adhesive (2) across the outer face(s) (120).

6. Method according to any one of the preceding claims, wherein the surface treatment (30) includes
removing a surface layer of the outer face (122), the surface layer including at least one of a coating, dirt, and corroded material; and/or
machining of the outer face (122) by means of a rotating wire brush.

7. Method according to any one of the preceding claims, wherein
applying (40) and arranging (50) is conducted such that alternating and/or stacked layers of adhesive (2) and flexible flat material (4) are provided at least in sections of the outer face (122),
particularly a repetition of applying (40) and arranging (50) is conducted for at least two times, preferably at least four times, particularly at least five times.

8. Method according to any one of the preceding claims, wherein
after the step of arranging (50) the step of curing (60) is conducted for at least one hour substantially at room temperature and/or between 50 °C and 0°C,
particularly curing (60) is conducted for at least three hours.

9. Method according to any one of claims 1 to 8, wherein
the flexible flat material (4) has or is a molding prepreg, and comprising after applying (50) the steps of
winding (52) on the outer faces (122) a foil (6), the foil (6) being a shrink foil, and
heating (54) the foil (6), particularly with an external heater.

10. Method according to any one of claims 1 to 8, wherein
the flexible flat material (4) has or is a fiber material, and comprising after curing (60) the step of
winding (62) on the outer faces (122) an infusion mesh (8), particularly wherein winding (62) is conducted for at least two times to provide stacked layers of the infusion mesh (8),
attaching (64) a vacuum foil (10) with at least one port (12) onto the outer faces (122),
creating (66) a vacuum inside the vacuum foil (10) acting on the outer faces (122) by application of a suction to the at least one port (12),
injecting (68) a molding material (14) into the at least one port (12) for forming a further composite material with the infusion mesh (8),
particularly wherein the molding material (14) corresponds to the adhesive and/or comprises a polymer compound, for example an epoxy resin, and optionally a hardener mixed with the polymer compound.

11. Kit (1) configured for conducting the method of any one of the preceding claims, comprising an adhesive (2), a flexible flat material (4) and a plurality of replacement nuts (16), further comprising
a foil (6) that is a shrink foil, and/or
an infusion mesh (8), molding material (14), and a vacuum foil (10) with at least one port (12), particularly wherein the molding material (14) corresponds to the adhesive (2) and/or wherein the adhesive (2) is a two-component adhesive.

12. Gas-insulated electrical application (100) with a section (110) comprising
an adhesive (2) applied to a outer face (122) of the section (110), and
a flexible flat material (4) arranged on the outer face (122) which forms a composite material with the adhesive (2),
optionally wherein the section (110) is a flange connection comprising two mating flanges (120) or a flange (120) closed with a lid, the flange connection comprising two of the outer face (122) and two axial outer faces (124) facing away from one another, bolt connections (112) extending through the mating flanges (120) or the flange (120) and the lid, and a ring gasket (114) between the mating flanges (120) or between the flange (120) and the lid, wherein the outer faces (122) are arranged axially adjacent,
optionally the bolt connections (112) comprising replacement nuts (16) with sealing rings (18).

13. Gas-insulated electrical application (100) according to claim 12, comprising
alternating and/or stacked layers of adhesive (2) and flexible flat material (4) and a foil (6) arranged on the outer faces (122), wherein the flexible flat material (4) has or is a molding prepreg, and wherein the foil (6) is arranged atop the flexible flat material (4).

14. Gas-insulated electrical application (100) according to claim 12, comprising
an infusion mesh (8), molding material (14) forming a further composite material with the infusion mesh (8) and a vacuum foil (10) arranged on the outer faces (122), wherein the flexible flat material (4) has or is a fiber material, wherein the vacuum foil (10) is arranged atop infusion mesh (8) and the infusion mesh (8) is arranged atop the flexible flat material (4), particularly wherein the molding material (14) corresponds to the adhesive (2).

15. Gas-insulated electrical application (100) according to any one of claims 12 to 14 and that is configured as a gas-insulated switchgear or a gas-insulated line with the section (110).
